# FASCICULE DE BREVET EUROPEEN

(11) **EP 2 579 062 B1**
(45) Date de publication et mention de la délivrance du brevet: **26.12.2018**
(21) Numéro de dépôt: 12187117.2
(22) Date de dépôt: 03.10.2012
(51) Int. Cl.: G01S 19/02, G01S 19/46, G01S 19/07

(54) **Système d'augmentation spatial adapté pour améliorer la précision et la fiabilité des données délivrées par un système de navigation par satellites, et procédé associé**
Angepasstes Raumvergrößerungssystem zur Verbesserung der Präzision und der Verlässlichkeit von Daten, die durch ein Satelliten-Navigationssystem übermittelt werden, und entsprechendes Verfahren
Spatial augmentation system adapted to improve the accuracy and reliability of data delivered by a satellite navigation system, and associated method

(30) Priorité: 07.10.2011 FR 1103057
(43) Date de publication de la demande: 10.04.2013
(73) Titulaire: Thales, 92400 Courbevoie (FR)
(72) Inventeur: Charlot, Bernard, 31000 Toulouse (FR); Bertin De La Hautiere, M. Gonzagues, 31400 Toulouse (FR); Trilles, Sébastien, 31000 Toulouse (FR)
(74) Mandataire: Brunelli, Gérald

(56) Documents cités:
- US-A1- 2004 088 111
- US-A1- 2009 121 927
- J. WESTBROOK ET AL.: "EGNOS Central Processing Facility architecture and design", GNSS 2000 CONFERENCE , 4 mai 2000 (2000-05-04), XP002676599, Edinburgh, Scotland, UK Extrait de l'Internet: URL:http://www.egnos-pro.esa.int/Publicati ons/GNSS%202000/GNSS2000_cpf.pdf [extrait le 2012-05-24]

## Description

La présente invention porte sur un système d'augmentation spatial adapté pour améliorer la précision et la fiabilité des données délivrées par un système de navigation par satellites, et procédé associé.

Les systèmes d'augmentation spatiaux ou SBAS pour "Space Based Augmentation Systems" sont des systèmes de radionavigation par satellites destinés à compléter des systèmes assurant un service de base de navigation par satellite ou GNSS pour "Global Navigation Satellite Systems" tels les systèmes GPS, GALILEO, ou GLONASS pour fournir conjointement des performances supérieures en terme de précision de localisation, de disponibilité et continuité du service et d'intégrité des informations fournies.

Ces systèmes transmettent sur un ou plusieurs satellites (typiquement géostationnaires) un signal en bande L transportant notamment une suite de messages de navigation ou NOF pour "Navigation Overlay Frame" en langue anglaise, à raison d'un message par seconde.

Ce signal et la suite de messages transmis sont définis par un document normatif international : RTCA MOPS DO229 actuellement en édition D "Minimum Operational Performance Standards for Global Positionning System/Wide Area Augmentation equipment". Le document XP002676599, J. WESTBROOK ET AL.: "EGNOS Central Processing Facility architecture and design", GNSS 2000 CONFERENCE, 4 mai 2000, divulgue un système d'augmentation spatial adapté pour améliorer la précision et la fiabilité des données délivrées par un système de navigation par satellites.

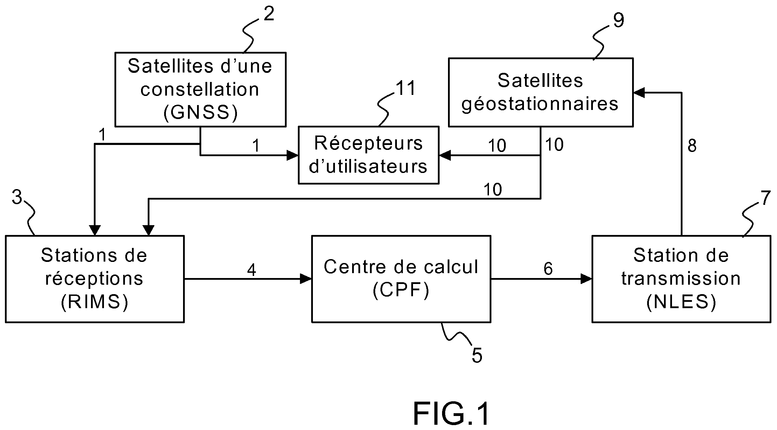

L'architecture de base d'un tel système d'augmentation spatial est représentée sur la figure 1.

Le signal 1 émis par des satellites 2 d'une constellation d'un système navigation par satellite GNSS est reçu par un ensemble de stations de réception au sol 3, ou RIMS pour "Ranging and Integrity Monitoring Station" en langue anglaise, dispersées sur un large territoire (par exemple l'Europe). Ces stations RIMS 3 transmettent des signaux 4 correspondant aux signaux reçus, à travers un réseau de longue distance ou WAN pour "Wide Area Network" en langue anglaise, à un centre de calcul 5 ou CPF pour "Central Processing Facility" en langue anglaise. Ce centre de calcul 5 élabore des correctifs et des données d'intégrité permettant de fournir à l'usager les performances requises et en transmet à chaque cycle une partie sous forme de messages numériques de navigation 6 ou NOF pour "Navigation Overlay Frame" en langue anglaise qui sont transmis à travers le réseau longue distance à une station au sol de transmission 7 ou NLES pour "Navigation Land Earth Station" en langue anglaise. Cette station au sol de transmission 7 transmet des signaux 8 correspondants aux signaux reçus, à des satellites géostationnaires 9 qui les rediffusent via des signaux 10 vers des récepteurs 11 d'usagers du service. Les récepteurs 11 des usagers reçoivent simultanément ces signaux 10 et 1 des satellites SBAS 9 généralement géostationnaires et les signaux des satellites 2 de la constellation du système de navigation par satellite GNSS et calculent chacun leur position à l'aide de ces deux types de signaux 1 et 10. Il faut noter que les stations de réception au sol 3 RIMS reçoivent aussi ces signaux 10 et qu'elles en transmettent les messages numériques de navigation NOF vers le centre de calcul 5 CPF de façon conjointe aux informations reçues des satellites 2 de la constellation GNSS.

Le cycle décrit ci-dessus est effectué par le système d'augmentation spatial SBAS de façon répétitive typiquement toutes les secondes. L'implémentation est souvent faite en pipe line, chaque élément effectuant durant un cycle le traitement des données qui seront traitées par l'élément suivant lors du cycle suivant.

Il faut noter qu'au niveau de l'usager la connaissance d'une suite de flux de messages de navigation NOF d'une certaine longueur (typiquement plusieurs minutes) est nécessaire pour calculer son positionnement. La cohérence des différents flux de messages de navigation NOF émis successivement est donc un enjeu majeur : c'est pourquoi l'on parle de suite de messages de navigation NOF émis, et non de messages de navigation NOF isolés.

Une telle réalisation de base ne permet pas de fournir la disponibilité à très court terme et la continuité attendues par les utilisateurs d'un tel système : typiquement une disponibilité de l'ordre de 99 % et une probabilité de perte de continuité meilleure que 10⁻⁵/h sont caractéristiques des performances attendues pour l'usage actuellement le plus répandu qui est celui de l'aéronautique civile.

Notamment une panne du centre de calcul principal entraîne l'interruption des transmissions du flux de messages de navigation ou NOF et une perte immédiate de continuité avec un impact sur la disponibilité.

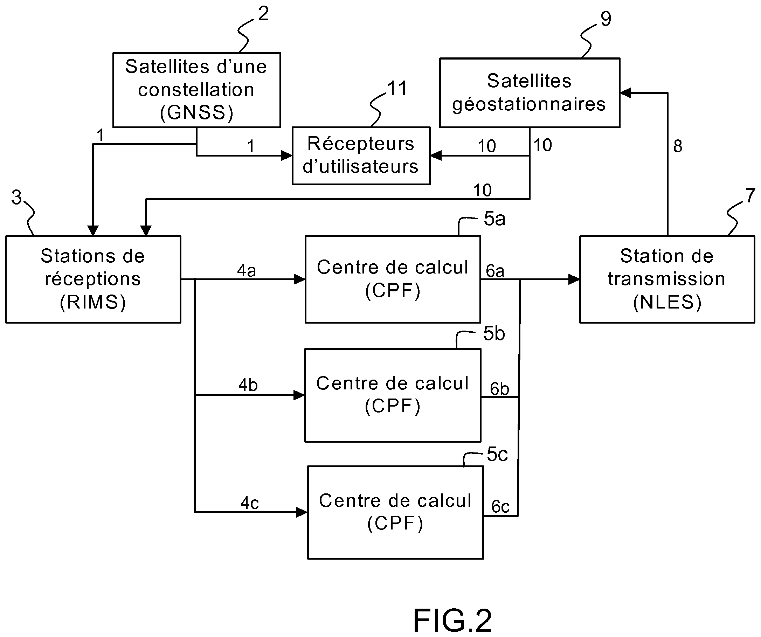

Il est connu des systèmes d'amélioration spatiale SBAS avec redondance, tel le système EGNOS, tel qu'illustré sur la figure 2.

Plusieurs centres de calculs ou CPF, en l'occurrence trois CPF 5a, 5b et 5c reçoivent respectivement en parallèle les signaux de données 4a, 4b et 4c des stations de réceptions RIMS et élaborent indépendamment leurs flux de messages de navigation respectifs ou NOF 6a, 6b et 6c qui sont chacun transmis à la station au sol de transmission ou NLES 7. La station au sol de transmission ou NLES 7 sélectionne un de ces flux de messages de navigation 8 parmi les flux de messages 6a, 6b ou 6c et le transmet à destination des récepteurs d'utilisateurs 11, en l'espèce par l'intermédiaire de satellites géostationnaires. En cas de panne d'un des centres de calcul 5a, 5b et 5c, la station au sol de transmission 7 ou NLES sélectionne le message d'un des autre centres de calcul ou CPF, maintenant ainsi la continuité de transmission de flux de messages de navigation ou NOF à destination des récepteurs d'utilisateurs. Le procédé mis en oeuvre par la station au sol de transmission 7 ou NLES est basé sur deux choses :
- le choix du centre de calcul ou CPF fournissant le flux de messages de navigation ou NOF assurant la meilleure performance pour la majorité des utilisateurs. Ce choix est basé sur un indicateur ou information représentative de qualité de service QoS établi par chaque centre de calcul ou CPF et transmis à la station au sol de transmission NLES ; et
- deux mécanismes d'hystérésis tendant à éviter des commutations trop fréquentes de centre de calcul dont on sélectionne le flux de messages de navigation ou NOF lorsque les informations représentatives de qualité de service QoS sont comparables.

Il est à noter que dans ce mode de réalisation, les centres de calculs ou CPF 5a, 5b, et 5c sont généralement situés sur des sites géographiques différents et éloignés pour éviter une panne complète en cas d'un problème majeur local (panne du réseau sur un pays, accident industriel majeur, catastrophe naturelle,....).

La solution classique EGNOS de la figure 2 présente un inconvénient majeur. En effet, chaque centre de calcul ou CPF élabore, cycle de calcul après cycle de calcul, des flux de messages de navigation ou NOF selon ses propres calculs. La suite de messages générée par un centre de calcul ou CPF n'est pas la même que celle générée par un autre centre de calcul.

En effet, cette suite de messages dépend d'éléments qui sont spécifiques à chaque centre de calcul ou CPF, même si ces centres de calcul sont fonctionnellement identiques (identité du matériel et du logiciel) :
- des données d'entrée : du fait de l'imperfection des réseaux de longue distance, les différents centres de calcul ou CPF ne reçoivent pas exactement les mêmes données d'entrée. Certains messages des stations de réception ou RIMS sont perdus ou remis hors délai ne permettant pas leur prise en compte dans le cycle courant de calcul ;
- de leur instant de démarrage : les calculs faits par un CPF ne dépendent pas que des données du cycle courant mais aussi de variables intermédiaires, calculées à partir de données reçues aux cycles précédents. Les calculs des centres de calcul ou CPF débutent à cet instant de démarrage qui est déterminé par des considérations opérationnelles. Ces variables intermédiaires ne sont donc pas calculées à partir du même historique de données passées et ne sont donc pas nécessairement identiques pour un cycle donné ; et
- du contexte opérationnel : par exemple, pour déterminer le temps SBAS (temps virtuel servant de référence commune pour tous les calculs dans un CPF (ENT pour "EGNOS Network Time" en langue anglaise) dans le cas d'EGNOS), le centre de calcul ou CPF considère les horloges de certaines stations de réception ou RIMS, à son démarrage. Si le réseau de stations de réception ou RIMS disponible au démarrage d'un centre de calcul est différent de celui correspondant à un autre centre de calcul, ces deux centres de calculs se synchronisent sur un temps virtuel basé sur un jeu d'horloges différentes.

Du fait de la différence entre ces suites de messages de navigation NOF, lors d'une commutation entre la suite de messages générée par un centre de calcul et celle générée par le centre de calcul choisi par la station au sol de transmission NLES pour prendre le relais, le problème du maintien de la cohérence entre ces suites de messages se pose.

Ceci a entrainé dans un système tel le système EGNOS, la nécessité d'introduire des marges dans certains paramètres majeurs pour éviter une dégradation de performances essentielles (comme l'intégrité) du fait de cette commutation entre deux suites de messages générées indépendamment. Ces marges diminuent la performance usuelle du système en dehors des périodes de commutation entre centres de calcul.

Un autre inconvénient est lié à la recherche dans les systèmes actuels d'une minimisation de cet effet très défavorable. Ceci est possible à au moyen de :
- l'utilisation d'un réseau de longue distance de grande qualité, implémentant lui même des redondances dans la transmission des données, ceci au détriment du coût du système. Typiquement l'utilisation d'un un réseau privé peut être nécessaire pour obtenir une grande qualité de transmission, difficile à atteindre sur des réseaux commerciaux partagés avec d'autres usagers ;
- l'utilisation d'une longue période de convergence des calculs d'un centre de calcul après son initialisation avant d'utiliser les sorties de ce centre de calcul dans le système opérationnel, lui permettant de rejoindre un état plus proche de celui des centres de calcul démarrés avant lui. Le centre de calcul est alors déclaré opérationnel et est sélectionnable par une station au sol de transmission NLES. Cette approche entraîne des difficultés opérationnelles, le redémarrage d'un centre de calcul prenant un temps important nuisible à une exploitation et une maintenance efficace du système. Typiquement la conception du système EGNOS prévoit une durée de convergence de 72 heures.

Un but de l'invention est de pallier les problèmes précédemment cités.

Il est proposé, selon un aspect de l'invention, un système d'augmentation spatial adapté pour améliorer la précision et la fiabilité des données délivrées par un système de navigation par satellites comprenant :
- au moins une station au sol de transmission de données à destination de satellites,
- au moins une station au sol de réception de signaux transmis par au moins un satellite d'un système de navigation et par au moins un satellite muni de moyens d'émission/réception adaptés pour émettre des données reçues de la station au sol de transmission à destination d'une zone géographique déterminée, et
- au moins deux centres de calcul au sol, en redondance, adaptés pour calculer respectivement les flux de messages de navigation et transmettre à la station au sol de transmission les flux de messages de navigation et une information représentative de la qualité du service fourni par le système, à partir de signaux transmis par la ou les stations au sol de réception.
Les centres de calcul, station au sol de réception et station au sol de transmission sont reliés par au moins un réseau de communication. La station au sol de transmission est adaptée pour sélectionner les flux de messages de navigation d'un centre de calcul maître en fonction des informations représentatives de la qualité de service respective desdits centres de calcul, et en ce que lesdits centres de calcul sont synchronisés sur ledit centre de calcul maître.

Un tel système permet en cas de panne du centre de calcul principal d'éviter une interruption des transmissions flux de messages de navigation ou NOF et une perte immédiate de continuité avec un impact sur la disponibilité.

De plus, la performance usuelle du système lors des périodes de commutation entre centres de calcul, n'est pas diminuée.

En outre, le redémarrage d'un centre de calcul est rapide, la nécessité d'une période de convergence étant éliminée.

Par ailleurs, le coût de déploiement et d'opération du système est diminué car on peut se satisfaire d'une qualité de réseau longue distance moindre.

Dans un mode de réalisation, le système est adapté pour transmettre, en continu, des variables internes permettant la synchronisation, du centre de calcul maître aux autres centres de calcul.

Cette transmission continue, permet une synchronisation fine et rapide des CPF non maîtres sur le CPF maitre.

Selon un mode de réalisation, les centres de calcul sont répartis par centres géographiques, un centre géographique comprend au moins deux desdits centres de calcul, lesdits centres de calcul d'un centre géographique étant reliés par des liens bidirectionnels d'un réseau local.

Ceci permet d'obtenir une qualité de synchronisation entre plusieurs CPF ne dépendant pas du réseau longue distance, donc tolérante à une qualité éventuellement faible de ce réseau.

Dans un mode de réalisation, lesdits centres géographiques distants sont reliés par des réseaux de communication bidirectionnelle longue distance.

Ceci permet de conserver une redondance si un site géographique donnée est affecté par un événement majeur (catastrophe naturelle,...).

Selon un mode de réalisation, la station au sol de transmission est adaptée pour modifier la sélection du centre de calcul maître, à un nouveau cycle de sélection, par choix du centre géographique puis du centre de calcul de ce centre géographique, le centre géographique sélectionné étant modifié en l'absence de flux de messages de navigation en provenance des centres de calculs de ce centre géographique, ou en présence d'informations représentatives d'une qualité de service respective inférieure à un seuil des centres de calculs de ce centre géographique.

Ceci permet de maximiser la continuité des messages émis vers l'usager, la priorité étant donnée à une commutation entre deux CPF d'un même site géographique (donc très bien synchronisés à travers le réseau local) par rapport aux autres CPF situés sur d'autres sites (qui peuvent être moins bien synchronisés).

Système selon l'une des revendications précédentes, dans lequel la station au sol de transmission est adaptée pour transmettre une information représentative du centre de calcul maître et son flux de messages de navigation par l'intermédiaire d'un réseau de transmission.

Dans un mode de réalisation, ledit réseau de transmission comprend au moins un satellite de transmission, par exemple géostationnaire.

L'utilisation d'un satellite permet de couvrir une large zone de service de façon économiquement efficace. Un satellite géostationnaire présente l'avantage de couvrir une très grande zone géographique, de surcroit pouvant être constante au cours du temps, contrairement à des satellites défilants. D'autres types de satellites sont mieux adaptés à la couverture de zones particulières comme les pôles ou d'usagers particuliers comme les véhicules urbains. D'autres modes de transmission peuvent aussi être utilisés pour déployer l'invention : par exemple et de façon non limitative : réseaux radio au sol, réseaux de téléphonie mobile.

Il est proposé, selon un autre aspect de l'invention, un procédé d'amélioration de la précision et de la fiabilité des données délivrées par un système de navigation par satellites, comprenant les étapes consistant à :
- sélectionner les flux de messages de navigation d'un centre de calcul maître en fonction des informations représentatives de la qualité de service respective d'au moins deux centres de calcul au sol en redondance, et
- synchroniser des centres de calcul sur ledit centre de calcul maître.

L'invention sera mieux comprise à l'étude de quelques modes de réalisation décrits à titre d'exemples nullement limitatifs et illustrés par les dessins annexés sur lesquels :
- la figure 1 illustre schématiquement l'architecture de base d'un système d'augmentation spatial ;
- la figure 2 illustre schématiquement le système d'augmentation spatial EGNOS ; et
- la figure 3 illustre schématiquement un mode de réalisation d'un système d'augmentation spatial, selon un aspect de l'invention.

Sur l'ensemble des figures, les éléments ayant les mêmes références sont similaires.

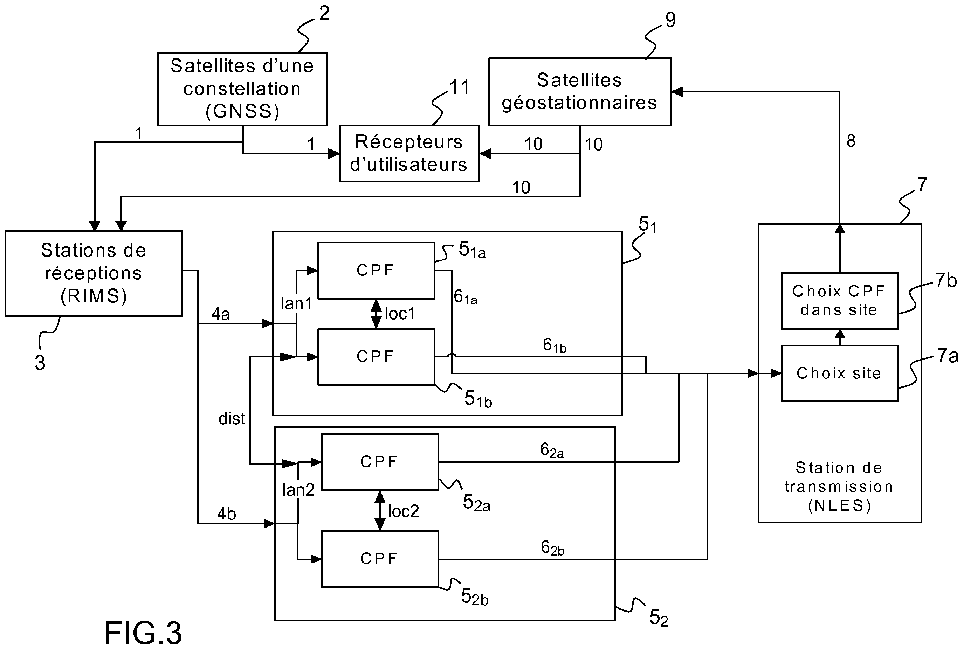

La figure 3 représente un système d'augmentation spatial adapté pour améliorer la précision et la fiabilité des données délivrées par un système de navigation par satellites.

Plusieurs centres de calculs ou CPF, en l'occurrence quatre centres de calcul ou CPF 5₁a, 5₁b, 5₂ₐ et 5_{2b} reçoivent respectivement en parallèle les signaux de données 4a et 4b des stations de réceptions RIMS et élaborent indépendamment leurs flux de messages de navigation respectifs ou NOF 6₁a, 6₁b, 6₂ₐ et 6_{2b} qui sont chacun transmis à la station au sol de transmission ou NLES 7. Les centres de calcul 5₁a et 5₁b sont sur une première zone géographique 5₁, et les centres de calcul 5₂a et 5₂b sont sur une deuxième zone géographique 5₂. La station au sol de transmission ou NLES 7 sélectionne un de ces flux de messages de navigation 8 parmi les flux de messages 6₁a, 6₁b, 6₂ₐ et 6_{2b} et le transmet à destination des récepteurs d'utilisateurs 11, en l'espèce par l'intermédiaire de satellites géostationnaires. En cas de panne d'un des centres de calcul 5₁a, 5₁b, 5₂ₐ et 5_{2b}, la station au sol de transmission 7 ou NLES sélectionne le message d'un des autres centres de calcul ou CPF, maintenant ainsi la continuité de transmission de flux de messages de navigation ou NOF à destination des récepteurs d'utilisateurs. Le procédé mis en oeuvre par la station au sol de transmission 7 ou NLES est basé sur deux choses :
- le choix du centre de calcul ou CPF fournissant le flux de messages de navigation ou NOF assurant la meilleure performance pour la majorité des utilisateurs. Ce choix est basé sur un indicateur ou information représentative de qualité de service QoS établi par chaque centre de calcul ou CPF et transmis à la station au sol de transmission NLES 7 ; et
- deux mécanismes d'hystérésis tendant à éviter des commutations trop fréquentes de centre de calcul dont on sélectionne le flux de messages de navigation ou NOF lorsque les informations représentatives de qualité de service QoS sont comparables.

Il est à noter que dans ce mode de réalisation, les centres de calculs ou CPF 5₁a, 5₁b, 5₂a et 5_{2b} sont généralement situés sur des sites géographiques différents 5₁, 5₂ et éloignés pour éviter une panne complète en cas d'un problème majeur local (panne du réseau sur un pays, accident industriel majeur, catastrophe naturelle,....).

La distribution des données des stations de réception ou RIMS 3arrivant sur une zone géographique par le réseau longue distance est ensuite assurée au sein de la zone géographique par un réseau local de haute performance assurant que les mêmes données arrivent aux centres de calcul.

Des liens loc1 et loc2 bidirectionnels sur les réseaux locaux permettent la distribution de données internes du CPF maitre permettant la synchronisation des calculs des flux de messages de navigation ou NOF vers les CPF locaux en redondance.

Des liens bidirectionnels sur le réseau longue distance dist permettent la distribution de données internes du CPF maitre permettant la synchronisation des calculs des flux de messages de navigation ou NOF vers les CPF de sites distants en redondance.

Le choix du centre de calcul ou CPF à sélectionner comme maître pour le flux de messages de navigation NOF du cycle en cours, sont faits dans la station de transmission ou NLES 7 en choisissant d'abord le site qui est sélectionné, par un module de choix de site géographique 7a, puis en choisissant le CPF dans ce site sélectionné, par un module de choix de CPF dans un site 7b. Le choix du site géographique n'est remis en cause d'un cycle à l'autre que s'il n'y a pas de CPF sélectionnable dans ce site (pas de données ou tous les CPF du site présentant une qualité de service QoS trop faible par rapport à un seuil de performance déterminé).

Durant un cycle de calcul, un CPF calcule le flux de messages de navigation NOF du cycle en utilisant en entrée :
- les données reçues des stations de réception ou RIMS 3 pour ce cycle ; et
- des variables intermédiaires internes qui résultent de calculs faits aux cycles précédents selon des procédés connus nécessaires dans un système d'augmentation spatial ou SBAS.
Typiquement, ces variables peuvent être :
- la suite de flux de messages de navigation NOF diffusés précédemment (sur la durée du plus long time out) ou les dates de dernière diffusion de certains messages de navigation NOF. Ceci est nécessaire pour garantir que les dates au plus tard (time out) de diffusion de certains messages sont bien respectées. Dans une architecture classique, la suite des messages de navigation NOF diffusés par le CPF maître est déjà connue de tous les CPF via le retour des stations de réception ou RIMS 3 ("RIMS raw data") et un retour de station de transmission ou NLES 7 ("NLES feedback"). Il est donc éventuellement inutile de dupliquer ces données dans le lien de synchronisation inter-CPF ;
- le contexte de calcul du modèle ionosphérique, pouvant comprendre des biais inter-fréquences et covariances associées, des biais matériels des différentes fréquences (L1,L2,..) et variances associées, des délais ionosphériques verticaux et variances associées, et un modèle de cohérence global de la ionosphère ;
- le contexte du modèle d'orbitographie des satellites, pouvant comprendre la liste des satellites visibles du réseau de stations de réception 3 et les informations de manoeuvres associées, et les positions et vitesses initiales et le temps de référence ;
- le contexte de synchronisation, pouvant comprendre la configuration des stations de réception ou RIMS 3 utilisée pour déterminer l'horloge de cadencement de temps du système SBAS, à partir d'un sous-ensemble d'horloges de cadencement typiquement celles de stations de réception, et l'estimation des paramètres de cette horloge de cadencement composite et sa variance.

Ces variables intermédiaires dans leur état au cycle précédent sont donc transmises du CPF maitre aux CPF redondants qui les utilisent dans leurs calculs du cycle courant. Les données transmises par les stations de réception ou RIMS 3 reçues par les différents CPF d'un même site géographique étant assurées identiques par le fait que le réseau longue distance assure seulement la transmission des données vers un site géographique, la distribution transite étant effectuée par un réseau local sur lequel ils est possible d'assurer un taux de perte pratiquement nul il en résulte que le flux de messages de navigation NOF calculé par les différents CPF d'un même site est alors le même.

Pour des CPF d'un autre site géographique, le même mécanisme est mis en place. Toutefois la transmission à longue distance de ce jeu de données intermédiaire peut ne pas être aussi parfaite que sur un site local et donc entrainer des désynchronisations limitées entres CPF de sites géographiques différents. Ceci explique l'intérêt de mettre aussi en place une fonction de sélection des CPF qui favorise la commutation entre CPF d'un même site évitant donc au maximum une commutation vers un CPF pouvant être éventuellement moins bien synchronisé.

Le volume de données à transmettre peut être typiquement estimé à 50 Koctets. Un diagramme temporel d'activité typique d'un CPF dans un système comme EGNOS montre que la période d'activité du CPF dans un cycle de 1s n'est actuellement que de 750 ms. Il reste donc 250 ms dans le cycle pour transmettre les variables intermédiaires aux autres CPFs.

Ceci est nettement suffisant sur un réseau local sur lequel le débit typiquement nécessaire de l'ordre de 200 Koctets/s est facilement accessible. Sur les réseaux à longue distance, des techniques de compression, par exemple par encodage différentiel d'un cycle à l'autre basé sur la fréquence de variation actuellement constatée de ces données, peuvent être nécessaires pour tenir le diagramme temporel requis tout en restant à des coûts réseau acceptables. Par exemple le débit actuel d'un lien entre sites géographiques est sur EGNOS de 512 kbits/s ce qui n'est pas suffisant pour assurer la transmission directe chaque seconde des données considérées. Des facteurs de compression de 2 à 10 sont usuels en utilisant de tels mécanismes.

Un point particulier de la synchronisation entre CPF est la séquence de démarrage d'un nouveau CPF et son introduction dans la chaîne opérationnelle, permettant la sélection de son message par la station de transmission ou NLES 7. Plusieurs cas sont à distinguer :
- démarrage du premier CPF du système : le démarrage se fera alors classiquement, ce CPF atteignant progressivement une convergence de ses algorithmes suffisante pour pouvoir être déclaré opérationnel (sélectionnable par la station de transmission ou NLES 7) ;
- démarrage d'un autre CPF de configuration identique : typiquement il s'agit d'un redémarrage après arrêt pour maintenance ou panne. Ce CPF attend d'abord d'être synchronisé par la réception des données intermédiaires du CPF maître (qui doit donc d'abord avoir convergé) pour démarrer. Dans le cas d'un CPF maître déjà opérationnel, le second CPF a un temps de convergence très réduit puisqu'il lui suffit d'attendre les quelques cycles nécessaires à la réception des données de synchronisation, il n'a pas à refaire sa propre période de convergence : ceci diminue beaucoup l'impact des opérations de maintenance. Dans le cas où le CPF maître est localisé sur le même site, la réception de ces données de synchro ne prend qu'un seul cycle. Dans le cas d'un CPF maître sur un site distant, et si une compression de données par différence entre cycles est utilisée pour diminuer le débit du réseau, il pourra être nécessaire d'attendre plusieurs cycles pour obtenir l'intégralité des données. L'algorithme de compression utilisé peut limiter cette attente en utilisant des solutions classiques de compression de données : par exemple un dixième de la totalité de l'information à transmettre est systématiquement envoyé chaque seconde en plus du flux de données codées différentiellement de manière à ce que toutes les données soient rafraichies au bout de dix cycles maximum, pour un CPF qui démarre. Par exemple, dans le cas d'EGNOS où chaque cycle dure une seconde, le temps de démarrage est considérablement réduit par rapport aux soixante-douze heures actuellement en vigueur ;
- démarrage d'un CPF avec une configuration différente : ce cas est lié au déploiement d'évolutions ou de corrections du CPF. Dans ce cas, l'objectif du déploiement est évidemment d'obtenir un comportement du CPF éventuellement différent de celui des CPF précédemment déployés. La façon dont ce CPF doit être mis en marche et la transition avec les autres CPF déployés doit donc être définie au cas par cas dans le plan de déploiement de la nouvelle version. Dans certains cas, il peut être nécessaire que ce CPF fasse son initialisation de façon indépendante et il peut donc s'avérer utile de prévoir un choix de la manière dont un CPF démarre : soit en se synchronisant sur le CPF maître courant, soit en démarrant de façon indépendante. Ceci peut être facilement implémenté par exemple par une variable de configuration ou un paramètre d'une commande de changement de mode.

Dans un système d'augmentation spatial SBAS classique, les différents centres de calcul ou CPF sont répartis sur différents sites géographiques. La justification technique de cette répartition est essentiellement la robustesse à des accidents voire des actes de malveillance : perte locale du réseau longue distance, défaillance de l'alimentation électrique, etc... Dans ce cadre, le nombre de centres de calcul ou CPF par site géographique n'est pas une caractéristique très importante. Il peut même être considéré que la répartition à raison de un seul CPF par site est la plus robuste de ce point de vue.

Dans le présent système, il est par contre important d'avoir au moins deux centres de calcul ou CPF par site géographique de manière à assurer que dans la plupart des cas, les commutations se fassent intra-site ce qui permet d'assurer la meilleure synchronisation entre les centres de calcul.

Par exemple l'architecture EGNOS initiale à quatre CPF répartis sur quatre sites (désormais réduite à trois sur le système opérationnel), serait optimisée par le présent système par la répartition des quatre CPF en deux ensembles de deux CPF sur deux sites géographiques différents. La caractéristique de résistance à un problème majeur local est conservée tout en permettant d'assurer des commutations entre CPF d'un même site dans la plupart des cas.

Actuellement la sélection permettant à une station de transmission NLES de sélectionner un CPF donné est basé sur :
- la liste des CPF sélectionnables pour le cycle courant : seuls sont sélectionnables les CPF dont la NLES a reçu le message ;
- une information représentative de la qualité de service QoS élaborée par chaque CPF et donnant une valeur estimée de la disponibilité moyenne du service pour les usagers. Le CPF ayant la meilleure qualité de service QoS est celui tendant à être sélectionné par la station de transmission ou NLES ;
- un mécanisme d'hystérésis visant à éviter des commutations trop fréquentes entre CPF de qualité de service QoS proche. Ceci est rendu nécessaire pour éviter de matérialiser au niveau des utilisateurs la perte de performance due aux différences entre les calculs des différents CPF.

Le présent système favorise, lors de commutations (rendues nécessaires soit par une panne du CPF maître, soit par un problème de réseau, soit par une qualité de service QoS trop faible sur un centre de calcul ou CPF, soit par un changement de mode (expliciter) des CPF), le choix d'un nouveau CPF situé sur le même site que l'ancien. Les autres caractéristiques de fonctionnement peuvent être maintenues dont l'hystérésis qui peut néanmoins s'avérer utile pour les commutations (beaucoup moins fréquentes) entre CPF de sites différents et aussi pour stabiliser le système, favorisant sa maintenance.

Les réseaux locaux sont par nature beaucoup moins sujets aux pertes de données ou aux retards que les réseaux de longue distance. De ce fait l'architecture classique d'un réseau local Ethernet par exemple offre déjà un très bon niveau de confiance dans le fait que toute donnée des stations de réception ou RIMS arrivant sur le site soit correctement acheminée aux différents CPF du site.

Néanmoins, les réseaux locaux permettent simplement d'augmenter encore cette qualité si besoin par différents moyens. Par exemple, une redondance des liens du réseau local peut être envisagée avec duplication des flux de données sur les différents liens. Les messages sont dupliqués à la source et les doublons supprimés par le CPF recevant les messages.

## Revendications

1. Système d'augmentation spatial adapté pour améliorer la précision et la fiabilité des données délivrées par un système de navigation par satellites (2) comprenant :
- au moins une station au sol (7) de transmission de données à destination de satellites (9),
- au moins une station au sol (3) de réception de signaux transmis par au moins un satellite d'un système de navigation (2) et par au moins un satellite (9) muni de moyens d'émission/réception adaptés pour émettre des données reçues de la station au sol (7) de transmission, à destination d'une zone géographique déterminée,
- au moins deux centres de calcul au sol (5₁a, 5₁b, 5₂a et 5_{2b}), en redondance, adaptés pour calculer respectivement les flux de messages de navigation et transmettre à la station au sol (7) de transmission les flux de messages de navigation et une information représentative de la qualité du service fourni par le système, à partir de signaux transmis par la ou les stations au sol (3) de réception
lesdits centres de calcul au sol (5₁a, 5₁b, 5₂a et 5_{2b}), station au sol de réception (3) et station au sol de transmission (7) étant reliés par au moins un réseau de communication, ledit système étant **caractérisé en ce que** : la station au sol de transmission (7) est adaptée pour sélectionner les flux de messages de navigation d'un centre de calcul maître parmi lesdits centres de calcul au sol (5₁a, 5₁b, 5₂a et 5_{2b}) en fonction des informations représentatives de la qualité de service respective desdits centres de calcul, et **en ce que** lesdits centres de calcul sont synchronisés sur ledit centre de calcul maître.

2. Système d'augmentation spatial selon la revendication 1, dans lequel le système est adapté pour transmettre, en continu, des variables internes permettant la synchronisation, du centre de calcul maître aux autres centres de calcul.

3. Système d'augmentation spatial selon l'une des revendications précédentes, dans lequel les centres de calcul (5₁a, 5₁b, 5₂a et 5_{2b}) sont répartis par centres géographiques (5₁, 5₂), un centre géographique comprenant au moins deux desdits centres de calcul, lesdits centres de calcul (5₁a, 5₁b, 5₂a et 5_{2b}) d'un centre géographique étant reliés par des liens bidirectionnels d'un réseau local.

4. Système d'augmentation spatial selon la revendication 3, dans lequel lesdits centres géographiques distants (5₁, 5₂) sont reliés par des réseaux de communication bidirectionnelle longue distance.

5. Système selon l'une des revendications précédentes, dans lequel la station au sol de transmission (7) est adaptée pour modifier la sélection du centre de calcul maître, à un nouveau cycle de sélection, par choix du centre géographique (5₁, 5₂) puis du centre de calcul (5₁a, 5₁b, 5₂a et 5_{2b}) de ce centre géographique, le centre géographique sélectionné étant modifié en l'absence de flux de messages de navigation en provenance des centres de calculs de ce centre géographique, ou en présence d'informations représentatives d'une qualité de service respective inférieure à un seuil des centres de calculs de ce centre géographique.

6. Système selon l'une des revendications précédentes, dans lequel la station au sol de transmission (7) est adaptée pour transmettre une information représentative du centre de calcul maître et son flux de messages de navigation par l'intermédiaire d'un réseau de transmission.

7. Système selon la revendication 6, dans lequel ledit réseau de transmission comprend au moins un satellite de transmission (9).

8. Système selon la revendication 7, dans lequel ledit satellite de transmission (9) est géostationnaire.

9. Procédé d'amélioration de la précision et de la fiabilité des données délivrées par un système de navigation par satellites (2) comprenant :
- au moins une station au sol (7) de transmission de données à destination de satellites (9), et
- au moins une station au sol (3) de réception de signaux transmis par au moins un satellite d'un système de navigation (2) et par au moins un satellite (9) muni de moyens d'émission/réception adaptés pour émettre des données reçues de la station au sol (7) de transmission, à destination d'une zone géographique déterminée,
- au moins deux centres de calcul au sol (5₁a, 5₁b, 5₂a et 5_{2b}), en redondance, adaptés pour calculer respectivement les flux de messages de navigation et transmettre à la station au sol (7) de transmission les flux de messages de navigation et une information représentative de la qualité du service fourni par le système, à partir de signaux transmis par la ou les stations au sol (3) de réception lesdits centres de calcul au sol (5₁a, 5₁b, 5₂a et 5_{2b}), station au sol
de réception (3) et station au sol de transmission (7) étant reliés par au moins un réseau de communication,
ledit procédé étant **caractérisé en ce qu'**il comprend les étapes consistant à :
- sélectionner, dans la station au sol de transmission (7), les flux de messages de navigation d'un centre de calcul maître parmi lesdits centres de calcul au sol (5₁a, 5₁b, 5₂a et 5_{2b}) en fonction des informations représentatives de la qualité de service respective d'au moins deux centres de calcul au sol en redondance, et
- synchroniser des centres de calcul sur ledit centre de calcul maître.

## Patentansprüche

1. Angepasstes Raumvergrößerungssystem zur Verbesserung der Präzision und der Verlässlichkeit von Daten, die durch ein Satellitennavigationssystem (2) übermittelt werden, Folgendes beinhaltend:
- mindestens eine Bodenstation (7) zur Übertragung von Daten an Satelliten (9),
- mindestens eine Bodenstation (3) zum Empfang von Signalen, die durch mindestens einen Satelliten eines Navigationssystems (2) und durch mindestens einen Satelliten (9), welcher mit Sende-/Empfangsmitteln versehen ist, die geeignet sind, um von der Boden-Übertragungsstation (7) empfangene Daten an eine bestimmte geografische Zone zu senden, übertragen werden,
- mindestens zwei Rechenzentren am Boden (5₁a, 5₁b, 5₂a und 5₂b), in Redundanz, die geeignet sind, jeweils die Flüsse der Navigationsmeldungen zu berechnen und an die Boden-Übertragungsstation (7) die Flüsse der Navigationsmeldungen und eine Information zu übertragen, welche die Qualität des vom System erbrachten Dienstes darstellt, anhand von Signalen, die durch die Boden-Empfangsstation(en) (3) übertragen werden,
wobei die Rechenzentren am Boden (5₁a, 5₁b, 5₂a und 5₂b), die Boden-Empfangsstation (3) und die Boden-Übertragungsstation (7) durch mindestens ein Kommunikationsnetzwerk verbunden sind, wobei das System **dadurch gekennzeichnet ist, dass**:
die Boden-Übertragungsstation (7) geeignet ist, um die Flüsse der Navigationsmeldungen eines Master-Rechenzentrums aus den Rechenzentren am Boden (5₁a, 5₁b, 5₂a und 5₂b) anhand der Informationen, welche die jeweilige Dienstqualität der Rechenzentren darstellen, auszuwählen, und dadurch, dass die Rechenzentren auf das Master-Rechenzentrum synchronisiert werden.

2. Raumvergrößerungssystem nach Anspruch 1, bei welchem das System geeignet ist, kontinuierlich interne Variablen, welche die Synchronisierung ermöglichen, vom Master-Rechenzentrum an die anderen Rechenzentren zu übertragen.

3. Raumvergrößerungssystem nach einem der vorhergehenden Ansprüche, bei welchem die Rechenzentren (5₁a, 5₁b, 5₂a und 5₂b) nach geografischen Zentren (5₁, 5₂) verteilt sind, wobei ein Rechenzentrum mindestens zwei solcher Rechenzentren beinhaltet, wobei die Rechenzentren (5₁a, 5₁b, 5₂a und 5₂b) eines geografischen Zentrums durch bidirektionale Verbindungen eines lokalen Netzwerks verbunden sind.

4. Raumvergrößerungssystem nach Anspruch 3, bei welchem die entfernten geografischen Zentren (5₁, 5₂) durch bidirektionale Langstrecken-Kommunikationsnetzwerke verbunden sind.

5. System nach einem der vorhergehenden Ansprüche, bei welchem die Boden-Übertragungsstation (7) geeignet ist, um die Auswahl des Master-Rechenzentrums zu ändern, bei einem neuen Auswahlzyklus, durch Wahl des geografischen Zentrums (5₁, 5₂) und anschließend des Rechenzentrums (5₁a, 5₁b, 5₂a und 5₂b) dieses geografischen Zentrums, wobei das ausgewählte geografische Zentrum bei Nichtvorliegen von Flüssen von Navigationsmeldungen von den Rechenzentren dieses geografischen Zentrums, oder bei Vorliegen von Informationen, welche eine jeweilige Dienstqualität darstellen, welche einen Grenzwert der Rechenzentren dieses geografischen Zentrums unterschreitet, geändert wird.

6. System nach einem der vorhergehenden Ansprüche, bei welchem die Boden-Übertragungsstation (7) geeignet ist, um eine das Master-Rechenzentrum darstellende Information und seinen Fluss von Navigationsmeldungen durch Vermittlung eines Übertragungsnetzwerks zu übertragen.

7. System nach Anspruch 6, bei welchem das Übertragungsnetzwerk mindestens einen Übertragungssatelliten (9) beinhaltet.

8. System nach Anspruch 7, bei welchem der Übertragungssatellit (9) geostationär ist.

9. Verfahren zur Verbesserung der Präzision und der Verlässlichkeit von Daten, die durch ein Satellitennavigationssystem (2) übermittelt werden, Folgendes beinhaltend:
- mindestens eine Bodenstation (7) zur Übertragung von Daten an Satelliten (9), und
- mindestens eine Bodenstation (3) zum Empfang von Signalen, die durch mindestens einen Satelliten eines Navigationssystems (2) und durch mindestens einen Satelliten (9), welcher mit Sende-/Empfangsmitteln versehen ist, die geeignet sind, um von der Boden-Übertragungsstation (7) empfangene Daten an eine bestimmte geografische Zone zu senden, übertragen werden,
- mindestens zwei Rechenzentren am Boden (5₁a, 5₁b, 5₂a und 5₂b), in Redundanz, die geeignet sind, jeweils die Flüsse der Navigationsmeldungen zu berechnen und an die Boden-Übertragungsstation (7) die Flüsse der Navigationsmeldungen und eine Information zu übertragen, welche die Qualität des vom System erbrachten Dienstes darstellt, anhand von Signalen, die durch die Boden-Empfangsstation(en) (3) übertragen werden,
wobei die Rechenzentren am Boden (5₁a, 5₁b, 5₂a und 5₂b), die Boden-Empfangsstation (3) und die Boden-Übertragungsstation (7) durch mindestens ein Kommunikationsnetzwerk verbunden sind,
wobei das System **dadurch gekennzeichnet ist, dass** es folgende Schritte beinhaltet:
- Auswählen, in der Boden-Übertragungsstation (7), der Flüsse der Navigationsmeldungen eines Master-Rechenzentrums aus den Rechenzentren am Boden (5₁a, 5₁b, 5₂a und 5₂b) anhand der Informationen, welche die jeweilige Dienstqualität von mindestens zwei redundanten Boden-Rechenzentren darstellen,
- Synchronisieren der Rechenzentren auf das Master-Rechenzentrum.

## Claims

1. A spatial augmentation system adapted to improve the accuracy and reliability of the data provided by a satellite navigation system (2), comprising:
- at least one ground station (7) for transmitting data to satellites (9),
- at least one ground station (3) for receiving signals transmitted by at least one satellite of a navigation system (2) and by at least one satellite (9) equipped with transmitting/receiving means adapted to transmit data received from the ground transmitting station (7) intended for a determined geographical area,
at least two redundant ground computing centres (5₁a, 5₁b, 5₂a and 5₂b), adapted to respectively calculate the navigation message streams and transmit to the ground transmitting station (7) the navigation message streams and information representative of the quality of service provided by the system, from signals transmitted by the ground receiving station or stations (3),
said ground computing centres (5₁a, 5₁b, 5₂a and 5₂b), the ground receiving station (3) and the ground transmitting station (7) being connected by at least one communication network, said system being **characterized in that**:
the ground transmitting station (7) is adapted to select the navigation message streams of a master computing centre among said ground computing centres (5₁a, 5₁b, 5₂a and 5₂b) as a function of the information representative of the respective quality of service of said computing centres, and **in that** said computing centres are synchronized on said master computing centre.

2. The spatial augmentation system according to claim 1, in which the system is adapted to continuously transmit internal variables allowing the synchronization, from the master computing centre to the other computing centres.

3. The spatial augmentation system according to one of the preceding claims, in which the computing centres (5₁a, 5₁b, 5₂a and 5₂b) are distributed by geographical centres (5₁, 5₂), a geographical centre including at least two of said computing centres, said computing centres (5₁a, 5₁b, 5₂a and 5₂b) of a geographical centre being connected by two-way links of a local area network.

4. The spatial augmentation system according to claim 3, in which said remote geographical centres (5₁, 5₂) are connected by long-distance two-way communication networks.

5. A system according to any one of the preceding claims, in which the ground transmitting station (7) is adapted to modify the selection of the master computing centre, in a new selection cycle, by choosing the geographical centre (5₁, 5₂) then the computing centre (5₁a, 5₁b, 5₂a and 5₂b) of this geographical centre, the selected geographical centre being modified in the absence of navigation message streams from the computing centres of this geographical centre, or in the presence of information representative of a respective quality of service below a threshold of the computing centres of this geographical centre.

6. The system according to one of the preceding claims, in which the ground transmitting station (7) is adapted to transmit information representative of the master computing centre and its navigation message stream via the intermediary of a transmission network.

7. The system according to claim 6, in which said transmission network includes at least one transmission satellite (9).

8. The system according to claim 7, in which said transmission satellite (9) is geostationary.

9. A process of improving the accuracy and reliability of the data provided by a satellite navigation system (2), comprising:
- at least one ground station (7) for transmitting data to satellites (9), and
- at least one ground station (3) for receiving signals transmitted by at least one satellite of a navigation system (2) and by at least one satellite (9) equipped with transmitting/receiving means adapted to transmit data received from the ground transmitting station (7) intended for a determined geographical area,
- at least two redundant ground computing centres (5₁a, 5₁b, 5₂a and 5₂b), adapted to respectively calculate the navigation message streams and transmit to the ground transmitting station (7) the navigation message streams and information representative of the quality of service provided by the system, from signals transmitted by the ground receiving station or stations (3),
said ground computing centres (5₁a, 5₁b, 5₂a and 5₂b), the ground receiving station (3) and the ground transmitting station (7) being connected by at least one communication network,
said process being **characterized in that** it comprises the following steps:
- selecting, in the ground transmitting station (7), the navigation message streams of a master computing centre among said ground computing centres (5₁a, 5₁b, 5₂a and 5₂b) as a function of the information representative of the respective quality of service of at least two redundant computing centres, and
- synchronizing the computing centres on said master computing centre.
